(19) Europäisches Patentamt
European Patent Office
Office européen des brevets

(11) **EP 3 580 087 B1**

(12) **FASCICULE DE BREVET EUROPEEN**

(45) Date de publication et mention
de la délivrance du brevet:
**27.01.2021 Bulletin 2021/04**

(21) Numéro de dépôt: **18706798.8**

(22) Date de dépôt: **06.02.2018**

(51) Int Cl.:
***B60N 2/427*** *(2006.01)*

(86) Numéro de dépôt international:
**PCT/FR2018/050288**

(87) Numéro de publication internationale:
**WO 2018/146412 (16.08.2018 Gazette 2018/33)**

(54) **SIEGE POUR VEHICULE AVEC DOSSIER BASCULANT**

FAHRZEUGSITZ MIT KIPPBARER RÜCKENLEHNE

VEHICLE SEAT WITH TILTING BACKREST

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.02.2017 FR 1751049**

(43) Date de publication de la demande:
**18.12.2019 Bulletin 2019/51**

(73) Titulaire: **Expliseat**
**75011 Paris (FR)**

(72) Inventeurs:
• **SAADA, Benjamin Jacob**
**75002 Paris (FR)**
• **SAILLARD, Nicolas**
**33470 Gujan-Mestras (FR)**
• **HERMIL, Thibault**
**75012 Paris (FR)**
• **JACOB, Christophe**
**94410 Saint Maurice (FR)**
• **TEJEDOR, Vincent**
**92130 Issy les Moulineaux (FR)**

(74) Mandataire: **Brevalex**
**95, rue d'Amsterdam**
**75378 Paris Cedex 8 (FR)**

(56) Documents cités:
**EP-A1- 2 955 055    FR-A1- 2 375 068**

**Description**

**DOMAINE DE L'INVENTION**

L'invention concerne les sièges équipant les véhicules, et en particulier les aéronefs, ces sièges étant souvent multiplaces et devant pouvoir assurer un maximum de sécurité pour le passager assis sur le siège placé directement derrière le siège considéré, en cas d'accident, crash ou atterrissage d'urgence, la tête, les bras et les pieds dudit passager pouvant être précipités contre la siège placé directement devant celui-ci.

**CONTEXTE, ART ANTERIEUR ET PROBLEME POSE**

Les sièges de moyen de transport, et en particulier des aéronefs, doivent passer des essais drastiques pour garantir la sécurité des passagers transportés. Des tests doivent évaluer notamment les dommages causés à un passager lors d'un atterrissage d'urgence, en supposant que le passager d'une rangée donnée puisse être alors arrêté par la rangée située immédiatement devant, dans le sens de vol de l'aéronef.

L'ensemble des autres tests imposés à la structure, statique et essais dynamiques avec une seule rangée, nécessitent un siège relativement rigide, le chemin de force reliant le passager au sol devant être intact à l'issue des essais. De plus, des processus actifs ou passifs d'amortissement d'énergie ne doivent se déclencher. Seul l'essai dit « deux rangées », qui évalue les impacts causés au passager en cas de crash, peut permettre l'activation des processus d'amortissement d'énergie.

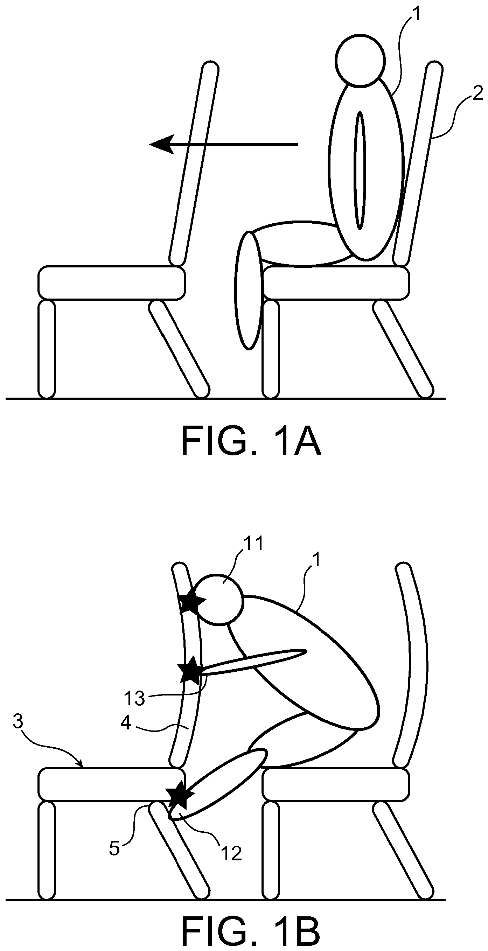

Le principe de l'essai est illustré par les figures 1A et 1B. Un passager 1 est assis sur un siège 2 de la rangée arrière, et une forte accélération (16g, c'est-à-dire 16 fois plus importante que l'attraction gravitationnelle à la surface de la Terre) le projette vers l'avant, afin de simuler un atterrissage d'urgence. Cette accélération est symbolisée par la flèche.

Dans le cas d'une structure de siège très rigide, de multiples impacts sont anticipés dans ce type de situation, comme illustré à la 1B.

Le principal impact est celui que subit la tête 11 du passager 1 en heurtant l'arrière du dossier du siège 3 de la rangée de devant. Pour cet impact, le critère des dommages à la tête 11 (« Head injury criterion » ou HIC) permet de quantifier la sévérité des dommages ressenti par le passager 1. Ce critère est défini avec la formule suivante :

$$\text{HIC} = \max_{t_1, t_2} \left( (t_2 - t_1) \left( \frac{1}{t_2 - t_1} \int_{t_1}^{t_2} a(t) dt \right)^{5/2} \right)$$

Dans cette formule, $t_1$ et $t_2$ sont deux bornes temporelles, le temps étant exprimé en secondes, et $a(t)$ est l'accélération de la tête 11 du mannequin au cours du temps, exprimée en g (g = 9,81 m.s$^{-2}$). Ce critère doit être inférieur à 1000 pour que le test soit considéré comme réussi.

L'impact secondaire est lié au choc des tibias 12 contre la structure basse 5 du siège 3, et un second critère est défini avec la compression mesurée au niveau des fémurs des mannequins, qui ne doit pas excéder un effort de 10 kN.

Enfin, le dernier impact est celui des mains 13 ou des poignets contre l'arrière du dossier 4 : cet impact est généralement de faible intensité, et peut uniquement être pris en considération comme un élément déclencheur de certains composants actifs ou passifs de sécurité.

Afin de minimiser les dommages pour le passager 1, le siège 3 doit être autant que possible déformable, et de faible rigidité. La déformabilité va permettre d'augmenter la surface de contact entre la tête 11 et le siège 3, et de minimiser la pression ressentie par la tête 11 lors de l'impact, la faible rigidité va limiter la transmission d'effort à surface de contact fixée.

Ces contraintes de déformabilité et de faible rigidité sont contradictoires avec les propriétés nécessaires pour satisfaire les exigences de tests statiques et de tests dynamiques. La structure doit au contraire se déformer le moins possible lors des sollicitations, et revenir autant que possible dans sa position initiale après l'essai.

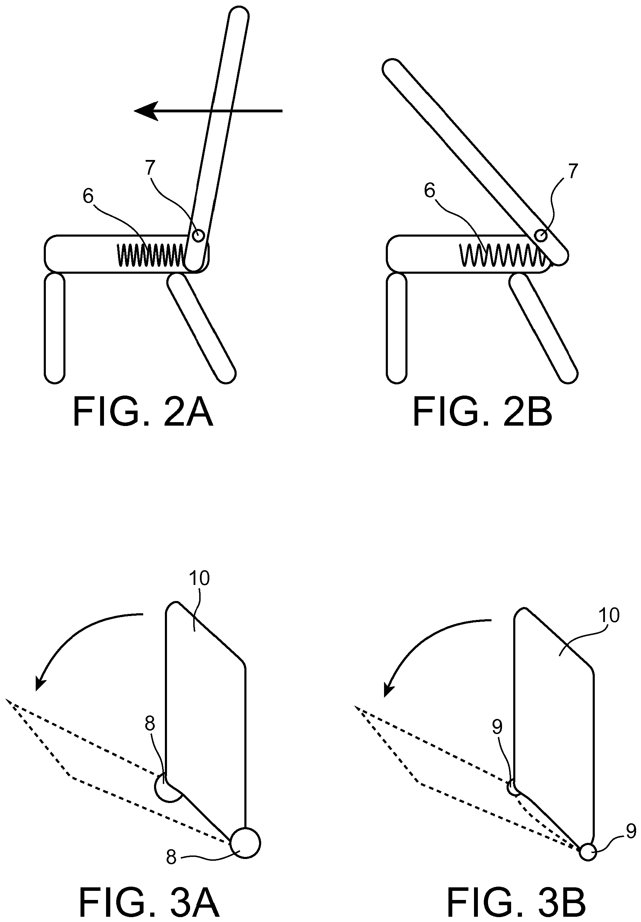

En référence aux figures 2A et 2B, une solution actuelle consiste à utiliser des composants passifs de sécurité, principalement des vérins ou ressorts 6, dans le mécanisme d'inclinaison des dossiers de siège. Un vérin linéaire ou un simple ressort 6 est logé dans l'assise du siège et activé en cas de choc, et permet d'amortir en douceur la tête du passager arrière.

Un critère important pour que le composant passif de sécurité soit qualifié est que le dossier 2 doit pouvoir être remis dans sa position initiale, après essai, avec une faible force. La solution avec vérin ou ressort 6 et axe de rotation 7 permet aisément d'atteindre cet objectif. La rotation est bloquée avec un élément fusible ou qui s'enclenche au-delà d'un certain niveau de force (cliquet), le ressort ou le vérin 6 permet d'amortir le mouvement vers l'avant du dossier 2, et l'axe de rotation guide 7 le dossier vers sa position initiale après essai.

Le système doit ainsi être activable uniquement lors d'un impact, amortir la tête du passager, et permettre une remise en position (réversibilité) du dossier 2 après l'essai.

Cette solution est simple à mettre en œuvre, mais reste relativement lourde dans le cas de sièges non inclinables, car l'axe de rotation 7 et le vérin ou ressort 6 ne servent alors que dans le cas d'un crash, et non en utilisation courante pour incliner le dossier 2 du siège vers l'arrière.

En référence aux figures 3A et 3B, dans le cas d'un siège à dossier 10 non inclinable, la problématique d'allègement de la masse se concentre dans la minimisation du système de rotation du dossier 10, un axe 8 important (figure 3A) étant très robuste, mais constituant une masse morte hors cas d'un crash. La diminution du diamètre de l'axe de rotation 9 (figure 3B) conduit à un risque de torsion plastique en cas de crash. Les deux axes de rotation de part et d'autre du dossier 10 ne sont alors plus alignés et la remise en place du dossier 10 peut nécessiter une force importante, plus grande que celle autorisée par la norme.

Pour comprendre l'intérêt de ce dispositif, il faut rappeler que le dossier est en temps normal sollicité dans toutes les directions de l'espace dans les essais statiques : avant/arrière (axe x), gauche/droite (axe y) et haut/bas (axe z).

Un axe de rotation simple et robuste (solution usuelle) fragilise le dossier dans le sens avant/arrière (rotation autour de l'axe y). L'élément fusible oppose une résistance en rotation et doit pouvoir tenir les moments imposés dans les essais statiques (90 kg en haut de dossier, soit environ 600 N.m au niveau de l'axe de rotation), ce qui conduit à un dimensionnement très contraignant.

Une liaison rotule, qui éviterait tout risque de désalignement des axes de part et d'autre du dossier, fragilise le dossier dans le sens avant/arrière (rotation autour de l'axe y) et dans le sens droite/gauche (translation selon l'axe y). L'élément fusible devrait également pouvoir supporter près de 600 N.m autour de l'axe y avant activation.

Un simple axe de rotation de part et d'autre du dossier 10 est ainsi trop fragile pour satisfaire l'ensemble des contraintes pesant sur le siège d'avion. Le FR2375068 montre un siège pour véhicule destiné à être fixé au plancher d'une cabine d'un véhicule, comprenant une ossature fixe comprenant elle-même des pieds et au moins une assise, et un dossier fixé à l'ossature fixe et comprenant deux montants placés de façon plus verticale qu'horizontale selon une direction déterminée.

## OBJET DE L'INVENTION

Pour obtenir un système léger et permettant la remise en place du dossier après le crash, le concept de la présente invention consiste à combiner un pivot et une glissière, afin d'ajuster le moment où la rotation est sollicitée pour diminuer les forces s'exerçant sur l'axe, et éviter le désalignement des axes de rotation de part et d'autre du dossier.

En conséquence, l'objet principal de l'invention est un siège pour véhicule destiné à être fixé au plancher d'une cabine d'un véhicule, comprenant :

- une ossature fixe comprenant elle-même des pieds et au moins une assise, et
- un même nombre de dossier(s) que d'assise(s) fixé(s) à l'ossature fixe et comprenant au moins deux montants placés de façon plus verticale qu'horizontale selon une direction déterminée (Y).

Selon l'invention, les montants sont enchâssés par une extrémité inférieure dans l'ossature de façon libérable par rapport à l'ossature fixe en translation vers le haut de manière à pouvoir se désenchâsser vers le haut sous l'effet d'un choc sur une face arrière du dossier correspondant et sont montés mobile en rotation autour d'au moins un axe fixe de l'ossature fixe, de façon à pouvoir pivoter vers l'avant après s'être désenchâssés, ceci en cas de choc de la tête d'un passager placé sur un siège fixé derrière le siège considéré, en cas d'atterrissage forcé dans le cas d'un aéronef.

De préférence, il comprend au moins un fusible mécanique entre chaque montant et l'ossature fixe pour bloquer en translation le montant en dessous d'une force déterminée.

Dans une première réalisation de l'invention, le pivotement de chaque montant est réalisé avec au moins un élément flexible fixé par une première extrémité à l'ossature fixe, au niveau de l'enchâssement, et, de façon coulissante, par une deuxième extrémité au montant, juste au-dessus de l'extrémité inférieure du montant, permettant de remettre le montant enchâssé dans l'ossature fixe après un pivotement par rapport à l'ossature fixe.

Le coulissement se fait avec une pince-glissière fixée à la deuxième extrémité dudit au moins un élément.

Dans une première réalisation de l'élément flexible, celui-ci est constitué d'un ruban flexible.

Dans une deuxième réalisation de cet élément flexible, celui-ci est constitué d'une lame-ressort.

Dans une troisième réalisation de cet élément flexible, ce dernier est constitué de deux tiges flexibles.

Dans une quatrième réalisation de cet élément flexible, ce dernier est constitué d'un ressort de torsion constitué d'une tige entourant le montant par une extrémité supérieure et entourant l'enchâssement par une extrémité inférieure.

Dans une deuxième réalisation de l'invention, le pivotement de chaque montant est réalisé avec au moins un axe mécanique de rotation fixé à l'ossature fixe et une fente du montant dans un sens longitudinal du montant et dans laquelle peut coulisser l'axe mécanique de rotation.

Ledit au moins un fusible mécanique peut être réalisé soit avec de la colle, soit avec au moins un rivet, notamment en matière plastique ou métallique.

## LISTE DES FIGURES

L'invention et ses différentes caractéristiques seront mieux comprises à la lecture de la description suivante de deux réalisations de l'invention. Elle est accompagnée de différentes figures représentant respectivement :

- figures 1A et 1B, un schéma évoquant un problème auquel est sensé remédier l'invention ;
- figures 2A et 2B, deux schémas explicatifs d'un dispositif selon l'art antérieur ;
- figures 3A et 3B, deux autres réalisations selon l'art antérieur ;
- figures 4A et 4B, des schémas explicatifs du concept selon l'invention ;
- figures 5A et 5B, deux schémas théoriques d'une première réalisation du siège selon l'invention ;
- figure 6, un schéma théorique d'une deuxième réalisation du siège selon l'invention ;
- figure 7, le siège selon l'invention avec la localisation du mécanisme de la réalisation des figures 5A et 5B;
- figures 8A et 8B, deux figures partielles agrandies des deux positions du siège selon l'invention ;
- figures 9A, 9B une deuxième mise en œuvre de la première réalisation ;

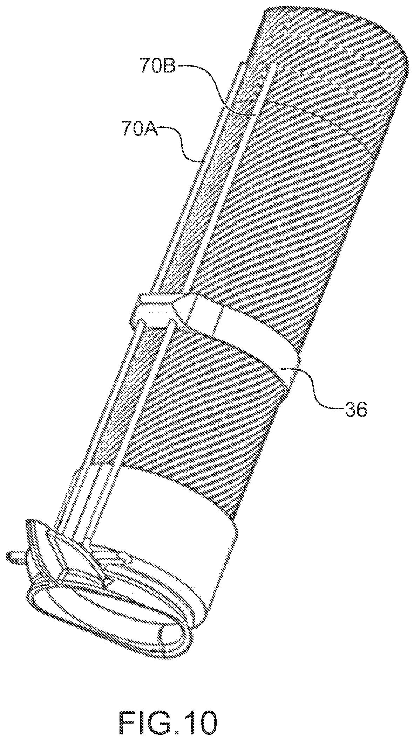

- figure 10, une troisième mise en œuvre de la première réalisation ; et

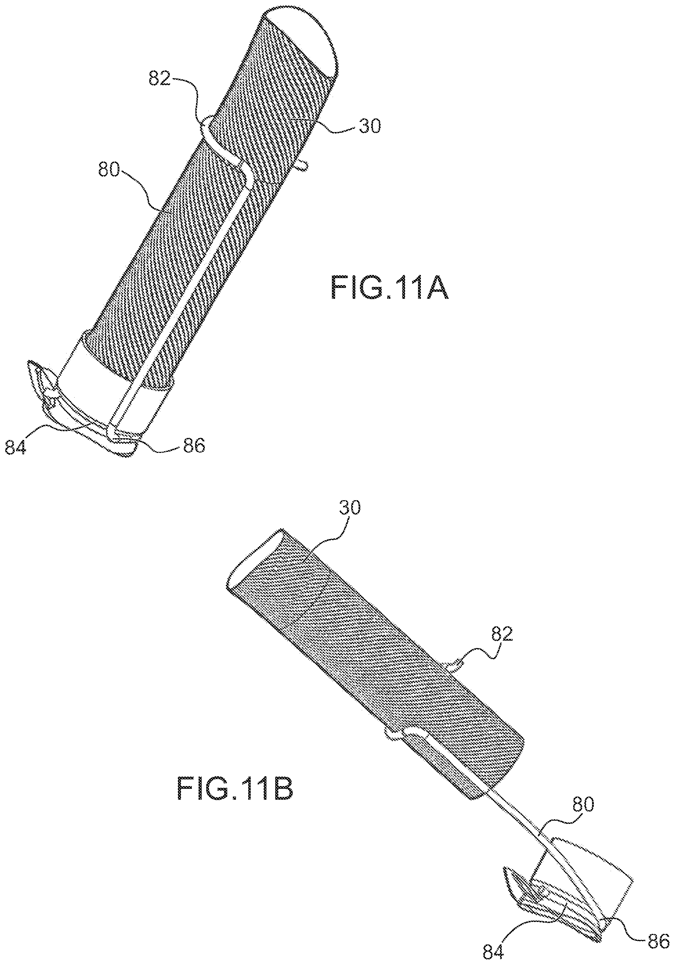

- figures 11A et 11B, une quatrième mise en œuvre de la première réalisation.

## DESCRIPTION DETAILLEE DE DEUX REALISATIONS DE L'INVENTION

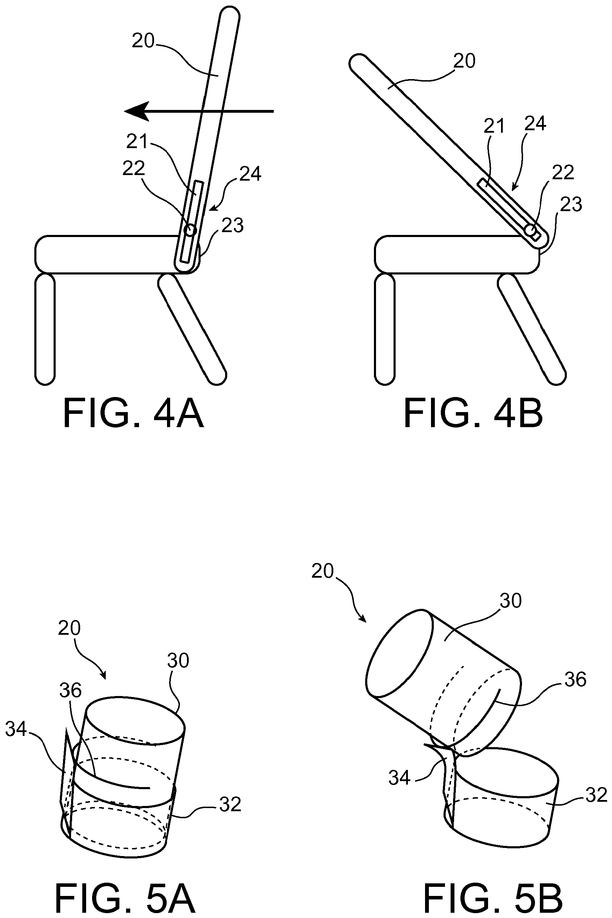

En référence aux figures 4A et 4B, le principe du siège utilise, schématiquement, une glissière 24 placée longitudinalement dans la partie inférieure du montant 20 du dossier et dans son axe de direction globalement verticale, en position d'utilisation. Un axe de rotation 22, solidaire de l'ossature fixe 23 du siège, et de diamètre légèrement inférieur à la largeur de fente 21 passe dans celle-ci. Théoriquement, le montant 20 du dossier peut donc coulisser dans une direction globalement verticale (axe Z) par rapport à l'ossature fixe 23 du siège. Ceci est représenté par la figure 4A.

La figure 4B montre l'état du siège selon l'invention, théoriquement, après le choc du corps d'un passager placé sur un siège placé lui-même derrière le siège représenté par ces figures 4A et 4B. Le montant 20 du dossier a subi une légère translation vers le haut, grâce à un coulissement du dossier par rapport à l'axe de rotation 22 qui est fixe par rapport à l'ossature fixe 23 du siège. Puis, après cette légère translation vers le haut, le montant 20 du dossier bascule vers l'avant, c'est-à-dire vers la gauche, sur la figure 4B.

La fixation du montant 20 du dossier par rapport à la structure fixe 23 du siège se fait par enchâssement libérable, c'est-à-dire un enchâssement qui n'est pas à ajustement serré. En effet, une réalisation préférée de ce type de siège consiste à ce que la structure fixe du siège soit constituée d'éléments tubulaires assemblés par des manchons avec un ajustement serré. Dans le cas du siège selon l'invention, l'ajustement du montant 20 du dossier dans l'ossature fixe 23 du siège n'est pas serré. De ce fait, lorsqu'un choc a lieu sur la surface arrière du montant 20 du dossier, celui-ci provoque, entre autres, des vibrations qui font que le montant 20 du dossier sort de son enchâssement non serré par rapport à la partie fixe 23 du siège, l'enchâssement n'étant pas réalisé sur une grande longueur. Une fois libéré de cet enchâssement, le dossier 20, sous l'effet de la force de l'impact sous la surface arrière du dossier 20 bascule naturellement.

Cette liaison axe de rotation 22/fente 21 permet de combiner une résistance avant/arrière sur une certaine portion de la fente, c'est-à-dire de cet ensemble formant glissière, une rotation aisée au-delà permettant une remise en place facile du dossier 20 dans son enchâssement, après le crash qui a provoqué indirectement ces mouvements. Un élément fusible non représenté sur ces figures consiste, dans ce cas, en une retenue vers le haut, empêchant, avant l'activation, le montant 20 du dossier de se translater. La sollicitation vers le haut du montant 20 du dossier, selon un axe globalement vertical (axe Z) est assez faible dans les essais usuels et peut être limité à 30 kg environ (300 N). L'élément fusible devant céder à environ 300 N peut être un simple rivet en plastique ou en métal alors qu'un élément fusible cédant à 600 N.m autour d'un axe de rotation conduirait à un système relativement lourd.

En référence aux figures 5A et 5B, l'extrémité inférieure 30 d'un montant du siège est donc encastrée de façon libérable dans un enchâssement 32 fixe sur la structure fixe du siège. La rotation théorique du montant 20, c'est-à-dire de l'extrémité inférieure 30 du montant 20 par rapport à l'enchâssement 32 est réalisée grâce à un ruban flexible 34 fixé sur une surface extérieure de l'enchâssement 32. Dans la partie supérieure du ruban flexible 34 est fixée une pince-glissière 36 entourant de manière coulissante l'extrémité inférieure 30 du montant 20, comme le montre la figure 5B, après un choc sur la face arrière du siège, c'est-à-dire sur le montant 20, son extrémité inférieure 30 se libère de sa position enchâssée dans son enchâssement 32 par une translation vers le haut.

Cette élévation du montant 20 et donc de son extrémité inférieure 30 est possible grâce au fait que la pince-glissière 36 n'est pas fixée à cette extrémité inférieure 30, mais l'entoure de façon ajustée.

Une fois l'extrémité inférieure 30 sortie de son enchâssement 32, le montant 20 pivote sous l'effet de la pression du choc de la tête du passager se trouvant derrière le siège grâce à la flexibilité du ruban flexible 34 fixé à l'enchâssement 32 et solidaire de la pince-glissière 36. Après la sortie du montant 20 par rapport à l'enchâssement 32 de l'ossature fixe du siège, après un crash ou un atterrissage d'urgence, grâce à la pince-glissière 36 et au ruban flexible 34, chaque montant peut être remis dans son enchâssement 32 respectif.

Sur ces figures 5A et 5B, le fusible mécanique n'a pas été représenté.

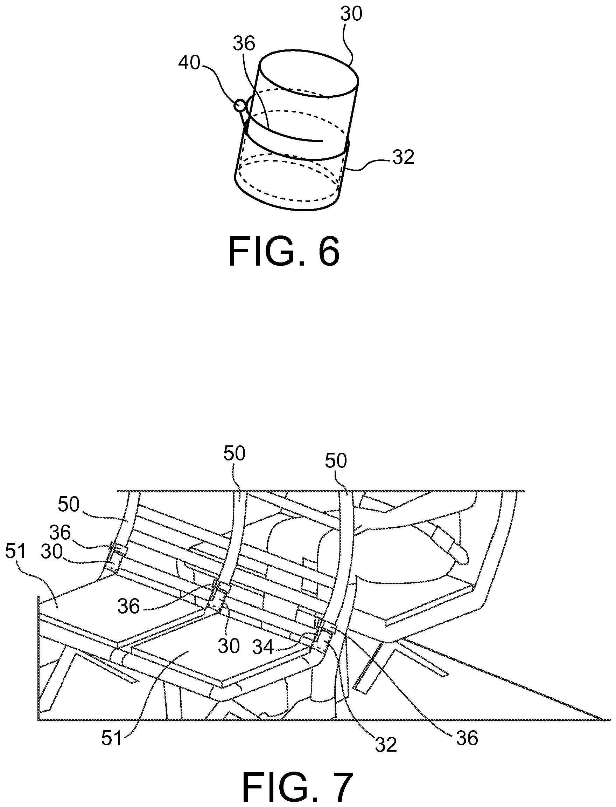

En référence à la figure 6, une deuxième réalisation envisagée de cette opération de translation et de rotation peut être effectuée au moyen d'un axe mécanique de rotation 40 fixé à l'enchâssement 32 et auquel est fixée la pince-glissière 36 entourant de manière coulissante l'extrémité inférieure 30 du montant.

La pince-glissière 36 peut être réalisée dans un matériau plastique ou métallique, sa fonction principale étant celle d'un guide, sans reprise des efforts autres que ceux de l'axe mécanique de rotation 40.

L'axe mécanique de rotation 40 est de préférence métallique, car il ne doit pas se désaxer lors d'un crash et doit permettre de remettre le montant 20 dans sa position initiale après l'essai. Le ruban 34 peut être métallique. Il permet d'obtenir, pour un ou un faible nombre d'essais, la rotation selon un axe perpendiculaire à l'axe principal du ruban. L'avantage de cette réalisation est que l'axe imaginaire perpendiculaire pourra être légèrement désaxé sans cause de difficultés particulières, lors de la remise en position, après essai, du montant dans son enchâssement. De plus, la position dans la direction verticale (axe X) de l'axe de rotation imaginaire ne sera pas fixe, minimisant ainsi les efforts.

Dans ces deux réalisations, les efforts avant/arrière sont transformés en rotation avec la liaison pivot et les efforts haut/bas conduisent à un simple glissement relatif des montants du dossier par rapport à leur enchâssement.

En référence à la figure 7, sur un siège à deux places 51, trois mécanismes sont nécessaires puisqu'il y est utilisé trois montants 50. Leur extrémité inférieure 30 est donc enchâssée dans leur enchâssement 32 de façon libérable, comme précédemment expliqué. Sur cette figure 7, sont également représentées les trois pinces-glissières 36.

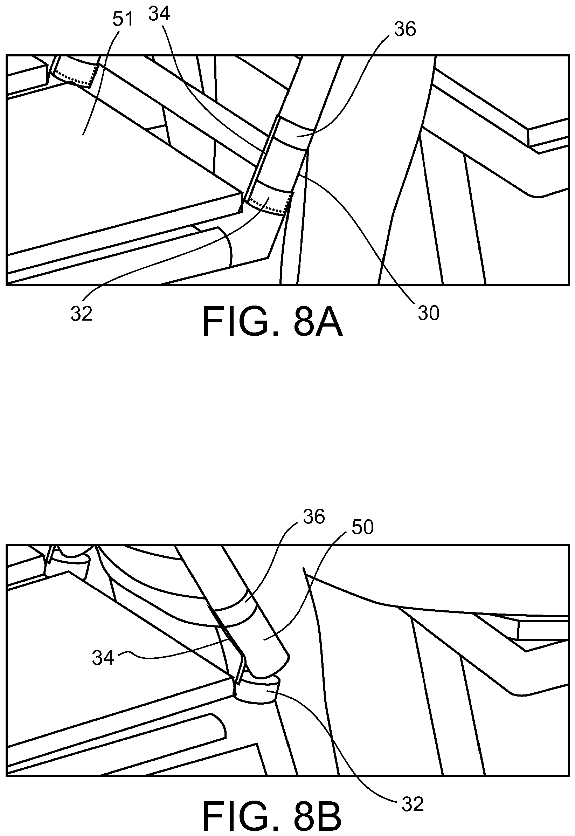

Les figures 8A et 8B montrent plus en détails cette réalisation dans les deux positions avant et après le crash, atterrissage d'urgence ou simple essai. Sur la figure 8A, chaque montant 50 est fixé par enchâssement par son extrémité inférieure 30 dans l'enchâssement 32 fixe du siège 51. Le ruban 34 est toujours fixé à l'enchâssement 32.

En référence à la figure 8B, après le choc provoqué sur la face arrière du dossier du siège, chaque montant 50 se libère de son enchâssement respectif 32 grâce au coulissement de la pince-glissière 36 fixée à l'extrémité supérieure du ruban flexible 34, fixé lui-même, par son extrémité inférieure, à l'enchâssement 32. La rotation de chaque montant 50 peut donc avoir lieu. On comprend que le ruban flexible 34 permet de remettre chaque montant 50 dans son enchâssement 32 respectif, après un choc, un accident, un crash, un atterrissage d'urgence ou un essai.

Le ruban flexible 34 peut être remplacé par d'autres éléments flexibles de manière générale.

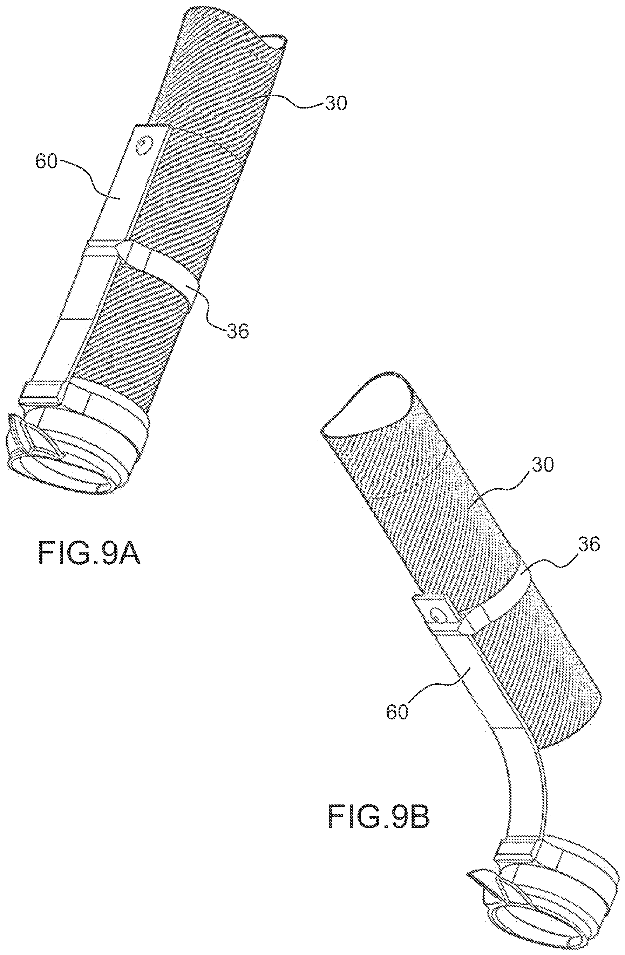

En référence aux figures 9A et 9B, l'élément flexible peut également être constitué d'une lame-ressort 60 fixée, par une extrémité inférieure 62 à l'enchâssement 32 et par une extrémité supérieure 64 à l'extrémité 30 du montant. Cette lame-ressort 60 passe à l'intérieur de la boucle que constitue la pince-glissière 36. Ainsi le montant 30 peut coulisser.

Dans une autre réalisation, l'élément flexible est constitué de deux tiges 70A et 70B flexibles et montées de manière analogue à la lame-ressort 60 des figures 9A et 9B.

Cet élément flexible peut également être réalisé sous la forme d'un ressort de torsion constitué d'une tige flexible 80 dont l'extrémité supérieure 82 entoure de façon coulissante l'extrémité inférieure 30 du montant. Par une extrémité inférieure 84, cette tige 80 entoure l'enchâssement 32. L'effet de torsion a lieu, notamment, au niveau d'un coude 86 reliant l'extrémité inférieure 84 de la tige 80 à cette dernière. Cette solution de ressort de torsion ne fonctionne pas par une flexion en zone élastique, mais bien par un effet de ressort, permettant au système de pouvoir être mis automatiquement dans sa position après un test ou un accident.

Ce système translation/pivot n'a pas ici pour objectif de permettre une nouvelle cinématique, mais uniquement de diminuer les contraintes effectives en torsion sur l'axe de rotation.

Une liaison translation/pivot permet de combiner une résistance avant/arrière sur une certaine portion de la liaison glissière, et une rotation aisée au-delà, permettant une remise en place facile du dossier après le crash. L'élément fusible consiste dans ce cas en une retenue vers le haut, empêchant avant l'activation le pivot d'être dans une zone où le dossier peut effectivement tourner, la sollicitation selon l'axe z étant assez faible dans les essais usuels, et qui peut être limité à 30 kg environ (300 N).

**Revendications**

**1.** Siège pour véhicule destiné à être fixé au plancher d'une cabine d'un véhicule, comprenant :

- une ossature fixe comprenant elle-même des pieds et au moins une assise, et
- un même nombre de dossier(s) que d'assise(s) fixé(s) à l'ossature fixe et comprenant au moins deux montants (20, 50) placés de façon plus verticale qu'horizontale selon une direction déterminée (Y),

**caractérisé en ce que** les montants (20, 50) sont enchâssés par une extrémité inférieure (30) dans l'ossature de façon libérable par rapport à l'ossature fixe en translation vers le haut de manière à pouvoir se désenchâsser vers le haut sous l'effet d'un choc sur une face arrière du dossier correspondant et sont montés mobile en rotation autour d'au moins un axe fixe de l'ossature fixe de façon à pouvoir pivoter vers l'avant après s'être désenchâssés.

2. Siège selon la revendication 1, **caractérisé en ce qu'**il comprend au moins un fusible mécanique entre chaque montant (20) et l'ossature fixe pour bloquer en translation le montant (20, 50) en dessous d'une force déterminée.

3. Siège selon la revendication 2, **caractérisé en ce que** le pivotement de chaque montant est réalisé avec au moins un élément flexible fixé par une première extrémité inférieure à l'ossature fixe, au niveau d'un enchâssement (32), et, de manière coulissante, par une deuxième extrémité au montant (20, 50), juste au-dessus de l'extrémité inférieure (30) du montant (20, 50), permettant de remettre le montant (20, 50) enchâssé dans l'ossature fixe après un pivotement par rapport à l'ossature fixe.

4. Siège selon la revendication 3, **caractérisé en ce que** la deuxième extrémité dudit au moins un élément (34) comprend une pince-glissière (36) entourant le montant (20, 50).

5. Siège selon la revendication 3, **caractérisé en ce que** l'élément flexible est constitué d'un ruban (34) flexible.

6. Siège selon la revendication 3, **caractérisé en ce que** l'élément flexible est constitué d'une lame-ressort (60).

7. Siège selon la revendication 3, **caractérisé en ce que** l'élément flexible est constitué de deux tiges (70A, 70B) flexibles.

8. Siège selon la revendication 3, **caractérisé en ce que** l'élément flexible est constitué d'un ressort de torsion constitué lui-même d'une tige (80) entourant l'extrémité inférieure (30) du montant par une extrémité supérieure (82) et entourant l'enchâssement (32) par une extrémité inférieure (84).

9. Siège selon la revendication 2, **caractérisé en ce que** le pivotement de chaque montant (20, 50) est réalisé avec au moins un axe mécanique de rotation (22) fixé à l'ossature fixe et une fente (21) du montant (20) dans un sens longitudinal du montant (20, 50) et dans laquelle peut coulisser l'axe mécanique de rotation (21).

10. Siège selon la revendication 2, **caractérisé en ce que** ledit au moins un fusible mécanique est réalisé avec de la colle.

11. Siège selon la revendication 2, **caractérisé en ce que** ledit au moins un fusible mécanique est réalisé avec au moins un rivet, notamment en matière plastique ou métallique.


**Patentansprüche**

1. Sitz für ein Fahrzeug, der dazu ausgelegt ist, am Boden einer Fahrzeugkabine befestigt zu sein, umfassend:

- ein festes Gestell, das selbst wiederum Füße und wenigstens eine Sitzfläche umfasst, und
- eine gleiche Anzahl von Rückenlehne(n) wie von Sitzfläche(n), die an dem festen Gestell befestigt ist/sind und wenigstens zwei Stützen (20, 50) umfassen, die in einer mehr vertikalen als horizontalen Weise entlang einer vorbestimmten Richtung (Y) platziert sind,

**dadurch gekennzeichnet, dass** die Stützen (20, 50) durch ein unteres Ende (30) in dem Gestell in einer bezüglich des festen Gestells durch eine Translation nach oben befreibaren Weise eingefasst sind, derart, dass sie nach oben unter der Einwirkung eines Stoßes gegen eine hintere Fläche der entsprechenden Rückenlehne gelöst werden können, und rotationsbeweglich um wenigstens eine feste Achse des festen Gestells herum derart montiert sind, dass sie nach vorne schwenken können, nachdem sie sich gelöst haben.

2. Sitz nach Anspruch 1, **dadurch gekennzeichnet, dass** er wenigstens eine mechanische Sicherung zwischen jeder Stütze (20) und dem festen Gestell umfasst, um die Stütze (20,50) unterhalb einer vorbestimmten Kraft translatorisch zu blockieren.

3. Sitz nach Anspruch 2, **dadurch gekennzeichnet, dass** das Schwenken jeder Stütze realisiert wird mit wenigstens einem flexiblen Element, das durch ein erstes unteres Ende an dem festen Gestell im Bereich einer Einfassung (32) befestigt ist, und in gleitender Weise durch ein zweites Ende an der Stütze (20, 50) knapp über dem unteren Ende (30) der Stütze (20, 50), was es ermöglicht, die in das feste Gestell eingefasste Stütze (20, 50) nach einer Schwenkung mit Bezug zu dem festen Gestell zurückzustellen.

4. Sitz nach Anspruch 3, **dadurch gekennzeichnet, dass** das zweite Ende des wenigstens einen Elements (34) eine Klemmgleitführung (36) umfasst, die die Stütze (20, 50) umgibt.

5. Sitz nach Anspruch 3, **dadurch gekennzeichnet, dass** das flexible Element durch ein flexibles Band (34) gebildet ist.

6. Sitz nach Anspruch 3, **dadurch gekennzeichnet, dass** das flexible Element durch eine Blattfeder (60) gebildet ist.

7. Sitz nach Anspruch 3, **dadurch gekennzeichnet, dass** das flexible Element durch zwei flexible Stangen (70A, 70B) gebildet ist.

8. Sitz nach Anspruch 3, **dadurch gekennzeichnet, dass** das flexible Element durch eine Torsionsfeder gebildet ist, die selbst wiederum durch eine Stange (80) gebildet ist, die das untere Ende (30) der Stütze mit einem oberen Ende (82) umgibt und die Einfassung (32) mit einem unteren Ende (84) umgibt.

9. Sitz nach Anspruch 2, **dadurch gekennzeichnet, dass** das Schwenken jeder Stütze (20, 50) realisiert wird mit wenigstens einer mechanischen Drehachse (22), die an dem festen Gestell befestigt ist, und einem Schlitz (21) der Stütze (20) in einer Längsrichtung der Stütze (20, 50), in dem die mechanische Rotationsachse (21) gleiten kann.

10. Sitz nach Anspruch 2, **dadurch gekennzeichnet, dass** die wenigstens eine mechanische Sicherung mit Klebstoff realisiert ist.

11. Sitz nach Anspruch 2, **dadurch gekennzeichnet, dass** die wenigstens eine mechanische Sicherung mit wenigstens einem Niet realisiert ist, insbesondere aus einem Kunststoff- oder Metallmaterial.

## Claims

1. Vehicle seat intended to be fixed to the floor of a cabin of a vehicle, comprising:

   - a fixed frame itself comprising feet and at least one seat base, and
   - the same number of backrest(s) as seat base(s) fixed to the fixed frame and comprising at least two uprights (20, 50) placed more vertically than horizontally along a determined direction (Y),

   **characterised in that** the uprights (20, 50) are embedded by a lower end (30) in the frame in a releasable manner with respect to the fixed frame in translation upwards in such a way as to be disembedded upwards under the effect of an impact on a rear face of the corresponding backrest and are rotatably mounted around at least one fixed axis of the fixed frame in such a way as to be able to pivot forward after being disembedded.

2. Seat according to claim 1, **characterised in that** it comprises at least one mechanical fuse between each upright (20) and the fixed frame for blocking in translation the upright (20, 50) below a determined force.

3. Seat according to claim 2, **characterised in that** the pivoting of each upright is carried out with at least one flexible element fixed by a first lower end to the fixed frame, on an embedding (32), and, slidingly, by a second end to the upright (20, 50), immediately above the lower end (30) of the upright (20, 50), making it possible to put back the upright (20, 50) embedded in the fixed frame after a pivoting with respect to the fixed frame.

4. Seat according to claim 3, **characterised in that** the second end of said at least one element (34) comprises a slide-pinch (36) that surrounds the upright (20, 50).

5. Seat according to claim 3, **characterised in that** the flexible element is formed from a flexible strip (34).

6. Seat according to claim 3, **characterised in that** the flexible element is formed from a spring blade (60).

7. Seat according to claim 3, **characterised in that** the flexible element is formed of two flexible rods (70A, 70B).

8. Seat according to claim 3, **characterised in that** the flexible element is formed from a torsion spring which itself is formed from a rod (80) that surrounds the lower end (30) of the upright by an upper end (82) and which surrounds the embedding (32) by a lower end (84).

9. Seat according to claim 2, **characterised in that** the pivoting of each upright (20, 50) is carried out with at least one mechanical axis of rotation (22) fixed to the fixed frame and a slot (21) of the upright (20) in a longitudinal direction of the upright (20, 50) and wherein the mechanical axis of rotation (21) can slide.

10. Seat according to claim 2, **characterised in that** said at least one mechanical fuse is carried out with glue.

11. Seat according to claim 2, **characterised in that** said at least one mechanical fuse is carried out with at least one rivet, in particular made of plastic or metal.

FIG. 1A

FIG. 1B

FIG. 2A

FIG. 2B

FIG. 3A

FIG. 3B

FIG. 4A

FIG. 4B

FIG. 5A

FIG. 5B

FIG. 6

FIG. 7

FIG. 8A

FIG. 8B

FIG.9A

FIG.9B

FIG.10

FIG.11A

FIG.11B

**EP 3 580 087 B1**

## RÉFÉRENCES CITÉES DANS LA DESCRIPTION

**Documents brevets cités dans la description**

- FR 2375068